(19) Europäisches Patentamt
European Patent Office
Office européen des brevets

(11) **EP 2 511 243 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(51) Int Cl.:
***C02F 1/58*** *(2006.01)*          *C02F 101/10* *(2006.01)*

(21) Anmeldenummer: **12401040.6**

(22) Anmeldetag: **12.03.2012**

(54) **Anlage und Verfahren zur Phosphorrückgewinnung aus Abwasser**

Apparatus and method for recovering phosphorous from waste water

Installation et procédé de récupération de phosphore à partir d'eaux usées

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2011 DE 102011016826**

(43) Veröffentlichungstag der Anmeldung:
**17.10.2012 Patentblatt 2012/42**

(73) Patentinhaber: **Karlsruher Institut für Technologie 76131 Karlsruhe (DE)**

(72) Erfinder:
• **Ehbrecht, Anke
76187 Karlsruhe (DE)**
• **Fuderer, Tanja
76776 Graben-Neudorf (DE)**
• **Schuhmann, Rainer
76149 Karlsruhe Deutschland (DE)**
• **Schönauer, Silke
76185 Karlsruhe (DE)**

(56) Entgegenhaltungen:
**JP-A- 2006 122 896     JP-A- 2009 285 636**

• **EHBRECHT A ET AL: "P-Recovery from sewage by seeded crystallisation in a pilot plant in batch mode technology", WATER SCIENCE AND TECHNOLOGY, Bd. 63, Nr. 2, 1. Februar 2011 (2011-02-01), Seiten 339-344, XP002680539, IWA PUBLISHING GBR ISSN: 0273-1223, DOI: 10.2166/WST.2011.061**
• **Ute Berg, Matthias Schwotzer, Peter Weidler, Rolf Nüesch: "Calcium silicate hydrate triggered phosphorus recovery-an efficient way to tap the potential of waste- and process waters as key resource", Water Environment Foundation WEFTEC, 2006, Seiten 1747-1765, XP002680540, Gefunden im Internet: URL:http://www.environmental-expert.com/Files%5C5306%5Carticles%5C8896%5C137.pdf [gefunden am 2012-07-20]**

**Beschreibung**

Die vorliegende Erfindung betrifft ein Verfahren zur Rückgewinnung von Phosphor aus Abwasser mit Hilfe eines Calcium-Silicat-Hydrat (CSH) als Kristallisationssubstrat und eine Phosphorrückgewinnungsanlage für den kontinuierlichen Betrieb. Weiterhin betrifft die Erfindung die Verwendung des mit phosphathaltigen Mineralphasen beladenen Substrats als Düngemittel.

Phosphate in Abwässern sind ein wesentlicher Grund für die Eutrophierung von Gewässern. Dies ist damit begründet, dass Phosphat hauptsächlich in wassergelöster Form vorliegt. Aus Kläranlagen gelangt das wassergelöste Phosphat in die Vorfluter und somit in die Umwelt. Problematisch sind insbesondere die leicht löslichen Polyphosphate, die sich in Sedimenten von Senken anreichern können. Diese Problematik besteht nicht nur bei Hausabwässern, sondern auch in der Lebensmittelindustrie (z. B. Milchverarbeitende Industrie, Kartoffelverarbeitung, Weinherstellung), der Automobilindustrie und bei der Flammschutzmittelherstellung fallen stark phosphathaltige Abwässer an.

Bei der Tierhaltung entstehen ebenfalls Abwässer (Gülle), die Phosphat in wassergelöster Form enthalten. Gülle wird üblicherweise als Wirtschaftsdünger direkt auf Ackerflächen aufgebracht. Dies ist nicht unproblematisch, da die wassergelösten Phosphate sehr schnell ins Grundwasser gelangen können und somit der Nutzpflanze nicht mehr zur Verfügung stehen. Weiterhin ist in Regionen mit Massentierhaltung die für die Ausbringung von Gülle notwendige Ackerfläche nicht ausreichend, da beim Phosphateintrag strenge Grenzwerte eingehalten werden müssen. Es besteht also Bedarf an Technologien zur effizienten Entfernung von Phosphat aus kommunalem, industriellem und landwirtschaftlichem Abwasser.

Gleichzeitig besteht ein großer Bedarf an Phosphaten, wobei die Ressourcen endlich sind. Phosphorressourcen lagern in der Erdkruste in Form von Phosphaterzen. Die Phosphaterz-Lagerstätten, die über hochkonzentrierten, mit heutigen Technologien wirtschaftlich abbaubaren und für die Weiterverarbeitung geeigneten Phosphor verfügen, sind auf einzelne Gebiete begrenzt. Eine Prognose über den Erschöpfungszeitpunkt der Phosphatreserven ist u.A. wegen der Unsicherheiten bzgl. der Entwicklungen im Bereich der Fördertechnologien, unentdeckter Lagerstätten sowie des zukünftigen weltweiten Bedarfs schwierig. Die Schätzungen schwanken in einem weiten Bereich von 20 bis ca. 100 Jahre.

Die Qualität des Rohphosphaterzes wird nicht nur am Phosphorgehalt, sondern auch an dessen Schadstoffgehalten beurteilt. Bei weiterer Förderung der Phosphatressourcen muss mit zunehmender Abbautiefe auf Erze mit höheren Cadmiumgehalten zurückgegriffen werden. Derzeit liegen die mittleren Cadmiumgehalte im Rohphosphaterze bei 15 mg/kg [Wagner, H. 1999 Geologisches Jahrbuch - Stoffmengenflüsse und Energiebedarf bei der Gewinnung ausgewählter mineralischer Rohstoffe - Teilstudie Phosphat, Bundesanstalt für Geowissenschaften und Rohstoffe, Reihe H, Heft SH5, Hannover], je nach Förderungsgebiet können diese bis zu 90 mg/kg ansteigen. Auch Uranverunreinigungen spielen mit zunehmender Fördertiefe eine Rolle. Der Preis für aufbereitetes Phosphaterz stieg daher auf dem Weltmarkt deutlich an. Es sind zukünftig infolge steigender Abraumverhältnisse und Schadstoffgehalte jedoch höhere Phosphatpreise zu erwarten. Eine direkte Verwendung des aufbereiteten Phosphaterzes als Dünger wird aufgrund der geringen Düngewirkung kaum praktiziert. Daher erfolgt üblicherweise eine nasschemische oder thermische Weiterbearbeitung zu Phosphorsäure, dem Hauptzwischenprodukt für die Herstellung von Mineraldüngern [Arbeitsbericht der ATV-DVWK-Arbeitsgruppe 1-1 "Phosphorrückgewinnung" Korrespondenz Abwasser, 6/2003, S. 805 - 814].

In Westeuropa finden Phosphatprodukte zu 79 % zur Herstellung von Düngemitteln, zu 11 % in der Tierfuttermittelproduktion und zu 7 % in der Wasch- und Reinigungsmittelherstellung Verwendung, dazu kommen noch 3% sonstige gewerbliche-industrielle Anwendungsbereiche. Nach Angaben der ATV [2003] setzt sich der jährliche Gesamtverbrauch an $P_2O_5$ aus einem Einsatz von ca. 400.000 t an mineralischen Phosphatdüngern, ca. 660.000 t Wirtschaftsdünger, 70.000 t Klärschlämmen und 6.000 t Kompost (jeweils in $P_2O_5$ angegeben) zusammen. Somit beläuft sich in Deutschland der Gesamtphosphateinsatz in der Landwirtschaft auf 1.15 Mio. t $P_2O_5$ pro Jahr. Es besteht also der Bedarf, die Phosphate aus Abwässern schadstofffrei und kostengünstig zurückzugewinnen, um es der Herstellung von Düngemitteln zuführen zu können.

Im Stand der Technik sind Verfahren offenbart, die wässrige Phasen im Nebenstrom mittels Kristallisation/Präzipitation behandeln.

Einen Ansatz stellt die Struvitpräzipitation ($MgNH_4PO_4 \cdot 6H_2O$) mittels Zugabe von Fällungsreagenzien - in der Regel $MgCl_2$ - und Einstellung des pH-Wertes mit NaOH dar: In Kläranlagen mit biologischer P-Elimination wird der DHV-Crystalactor®, ein sog. Pellet-Reaktor mit Sand als Kristallisationskeimen, eingesetzt. Ebenfalls in Kläranlagen mit biologischer P-Elimination ist der CSIR-Wirbelschichtreaktor einsetzbar.

In Edmonton, Kanada, ist eine großtechnische Anlage seit Mai 2007 in Betrieb. Ähnlich arbeitet die Nuresys-Anlage zur P-Rückgewinnung, die 2006 auf einer Kläranlage in Norddeutschland in Betrieb genommen wurde. Von Unitika Ltd. wurde die Phosnix-Anlage entwickelt [Ueno, Y. und Fujii, M. (2001): Three years operating experience and selling recovered struvite from full-scale plant. Environmental Technology Volume 22, Nr. 11, November 2001, p. 1373-1381]. Im Verfahren der Berliner Wasserbetriebe wird neben der Zugabe von Fällungsreagenz noch ein Antiinkrustationsmittel eingesetzt [Heinzmann, B. und Engel, G. (2005): Stand der Phosphorrückgewinnung bei Kläranlagen mit biologischer Phosphorelimination der Berliner Wasserbetriebe. In: Verein zur Förderung des Institutes WAR (Hrsg.):

Rückgewinnung von Phosphor aus Abwasser und Klärschlamm, Konzepte, Verfahren, Entwicklungen. 75. Darmstädter Seminar Abwassertechnik, 12.-13. November 2005. Schriftenreihe WAR, Band 167, Darmstadt 2005, ISBN 3-932518-63-2]. Das Kurita-Festbett arbeitet mit Rohphosphat-Impfkristallen [Stratful, I., Brett, S., Scrimshaw, M.B., Lester, J.N. (1999): Biological phosphorus removal, its role in phosphorus recycling. Environmental Technology, Volume 20, Nr. 7, July 1999, p. 681-696]. Mit Zugabe von Ca-Hydroxid wurde mit dem Sydney Water Board Reactor zur Rückgewinnung von Phosphor anhand von Ca-Phosphaten wenig erfolgreich experimentiert, da der Reaktor aufgrund einer geringen Effizienz wenig wirtschaftlich war [Stratful, I., Brett, S., Scrimshaw, M.B., Lester, J.N. (1999): Biological phosphorus removal, its role in phosphorus recycling. Environmental Technology, Volume 20, Nr. 7, July 1999, p. 681-696]. Im PRISA-Verfahren wird MgO und NaOH zur Kristallisation von Struvit eingesetzt [Pinnekamp, J., Montag. D., Gethke, K., Goebel, S., Herbst, H. (2007): Rückgewinnung eines schadstofffreien, mineralischen Kombinationsdüngers "Magnesium-Ammonium-Phosphat - MAP" aus Abwasser und Klärschlamm. UBA-Texte 25/07. Forschungsbericht 20233308, Dessau, Juli 2007, ISSN 1862-4804]. Ebenfalls mit MgO arbeitet das Phospaq-Verfahren, das auf einer Kläranlage in den Niederlanden eingesetzt wird [Abma, W.R., Driessen, W., Haarhuis, R., van Loosdrecht, M.C. (2010): Upgrading of sewage treatment plant by sustainable and cost-ewffective separate treatment of industrial wastewater. Water Sci. Technol. 2010, 61(7), S. 1715-1722].

Den zur Struvitpräzipitation aufgeführten Verfahren ist allen die Zugabe von Reagenzien - ob mit oder ohne Kristallisationsmaterial - gemein. Dies stellt neben dem Kostenaspekt durch den Einsatz von Chemikalien einen zusätzlichen verfahrenstechnischen Aufwand von Zu- und Ableitungen, Prüf- und Dosiereinheiten, Vorratsbehältern etc. dar, was in jedem Fall in einer ungünstigeren Wirtschaftlichkeit sichtbar wird. Somit können die Systeme in großtechnischen Anwendungen auf Dauer nicht bestehen. Davon abgesehen, zeichnet sich die Mehrheit der aufgeführten Verfahren (Phospaq, PRISA, Phosnix Unitika Ltd., Kurita-Festbett, Nuresys-Anlage, CSIR-Wirbelschichtreaktor, Sydney Water Board Reactor) durch geringe Effizienz aus.

In Patent DE 1035744 B4 wird ein Verfahren zur Ausfällung von Phosphat aus Abwässern mit Hilfe von vorbeladenem Calciumcarbonat als Kristallisationskeim bei einem pH-Wert zwischen 6 und 8 beansprucht. Dieses sog. P-RoC-Verfahren ist aufgrund des eingesetzten Materials unzureichend: Zum einen ist die Vorbeladung des eingesetzten Calcits von der Qualität des eingesetzten Abwassers abhängig - so sind positive Effekte auf die nachfolgende Elimination nur bei Beladung mit synthetischem Abwasser, das mit Phosphat-Lösung dotiert wurde, erkennbar. Auch ist Calcit in hohem Maß anfällig für Organo-Coating durch gelöste organische Substanz, wie sie im Abwasser grundsätzlich vorhanden ist - was durch die Fremdbelegung der calcitischen Oberfläche eine weitere Kristallisation von Calciumphosphat unterbindet. Zudem findet die Kristallisation/Fällung von Calciumphosphaten bei pH-Werten von 8-9 statt. Durch den Einsatz von (vorbeladenem) Calcit kann in der wässrigen Lösung jedoch nur ein pH-Wert von < 8 erreicht werden, was zu einer sehr geringen Effizienz der P-Elimination führt.

In [Ehhrecht et al.: Water Science and Technology, 2011, vol. 63(2), S.339-344] wird ferner eine Anlage zur Phosphoreliminierung aus Abwasser mit dem Substrat Calcium-Silicat-Hydrat (CSH) im Batchmodus beschrieben, wobei phosphorhaltige Abwässer mit dem Substrat CSH in einem Rührreaktor miteinander in Kontakt gebracht werden und anschließend der Inhalt des Rührreaktors mittels Pumpe in einen Sedimentationsbehälter überführt werden. Im Sedimentationsbehälter erfolgt die Abtrennung des Abwassers vom seidmentierten CSH-Substrat.

Um die Nachteile des Stands der Technik zu überwinden ist es **Aufgabe der Erfindung,** eine Technologie zur Phosphorrückgewinkung bereitzustellen, welche in guter Ausbeute das gelöste Phosphat aus dem Abwasser im kontinuierlichen Betrieb abtrennt, ohne dass komplizierte verfahrenstechnische Maßnahmen wie z.B. das Einstellen des pH-Werts notwendig sind. Das Verfahren sollte auch dann noch effizient funktionieren, wenn die Beladung mit organischen Material hoch ist, wie z.B. in Gülle. Dieses Verfahren sollte im kontinuierlichen Betrieb einsetzbar sein. Das durch dieses Verfahren erhaltene feste Produkt, welches mit Phosphat angereichert ist, sollte idealerweise direkt als Phösphatdüngemittel einsetzbar sein, und dabei die Phosphatladung langsam an die Umwelt abgeben, damit keine Belastung für Grund- und Oberflächenwasser entsteht. Hierbei ist wünschenswert, dass die Schwermetallbelastung sehr niedrig ist.

Die vorliegende Erfindung löst die Aufgabe durch die in Anspruch 1 beanspruchte Anlage und das in Anspruch 6 beanspruchte Verfahren. Bevorzugte Ausführungsformen der Anlage und des Verfahrens sind in den rückbezogenen Ansprüchen beschrieben.

Die erfindungsgemäße Behandlungsanlage umfasst einen Rührreaktor und einem Sedimentationsbehälter. Idealerweise werden die Behälter so angeordnet, dass das Abwasser im freien Gefälle, d.h. ohne zu pumpen, durch die Anlage fließen kann.

Der Rührreaktor ist ein im wesentlichen zylindrischer Behälter, der eine Rührvorrichtung umfasst, die zentrisch angeordnet ist und derart konstruiert ist, dass das Behältervolumen im Betrieb in eine im oberen Teil befindliche Ruhezone und eine im unteren Teil befindliche Reaktionszone unterteilt ist. Diese Aufteilung hat den Sinn, dass das im Behälter befindliche Substrat in Schwebe gehalten wird, damit ein intensiver Kontakt zum Abwasser hergestellt wird. Hierzu wird durch die Rührvorrichtung eine dosierte Turbulenz in die Reaktionszone eingebracht, dass die Substratpartikel nicht erodiert werden, aber an der Oberfläche der Partikel eine angemessene Grenzflächenerneuerung bewirkt wird. Gleichzeitig verbleiben die Substratpartikel in der Reaktionszone, damit so wenig Substrat wie möglich in die obere Ruhezone gelangt. Daher ist in der Ruhezone die Wasserbewegung möglichst gering zu halten. Die Ruhezone ist so bemessen, dass Substratpartikel sedimentieren können, um ein Austragen aus dem Rührreaktor zu vermeiden.

Vorzugsweise ist das Rührreaktorvolumen derart aufgeteilt, dass die Ruhezone 10 - 30 % und die Reaktionszone 70 - 90 % des Volumens ausmacht. In einer weiteren bevorzugten Ausführung des Rührreaktors liegt das Verhältnis von Höhe zu Durchmesser mindestens bei 2:1. Optional kann die Wandung des Rührreaktors mit Strömungsbrechern ausgestaltet sein, um eine bessere Verwirbelung des Substrats im Abwasser zu erreichen.

Der Zulauf des Abwassers in den Rührreaktor ist idealerweise in der Mitte der Reaktionszone angeordnet, sodass sich das Abwasser unmittelbar mit dem suspendierten Substrat vermischt. Wird das Abwasser zu nahe an der oberen Ruhezone eingebracht, so besteht die Möglichkeit, dass der Kontakt zum Substrat nicht ausreichend war, um Phosphat in ausreichenden Mengen zu binden. Dadurch würde ggf. ungereinigtes Abwasser in den Sedimentationsbehälter gelangen. Optional kann dem Rührreaktor ein Vorlagebehälter vorgeschaltet sein. Dies erlaubt die Bereitstellung des benötigten Abwasservolumens für die Reaktion und ggf. Vorreinigung des Abwassers z. B. durch Sedimentation.

Das Substrat, mit welchem der Rührreaktor beschickt wird, ist ein Calcium-Silicat-Hydrat (CSH) Substrat. Das CSH-Substrat dient dazu, das gelöste Phosphat zu binden bzw. zu kristallisieren und somit aus dem Abwasser zu entfernen. Vorzugsweise liegt das CSH-Substrat in Partikelform vor.

Im Zusammenhang mit der vorliegenden Erfindung ist unter dem Begriff Calcium-Silicat-Hydrat Substrat eine Zusammensetzung zu verstehen, die CaO, $SiO_2$ und $H_2O$ in verschiedenen Mengenverhältnissen enthält. Grundsätzlich kann das CSH-Substrat weitere Bestandteile oder Trägermaterialen enthalten. Das CSH setzt in Kontakt mit Wasser Hydroxidionen frei, wodurch sich ein alkalischer pH-Wert einstellt. Das CSH-Substrat ist nur marginal mit Schwermetallen belastet.

Vorzugsweise wird ein CSH-Substrats optimierter Sieblinie eingesetzt, um eine möglichst große spezifische Oberfläche und entsprechende Reaktivität des Materials zu gewährleisten. Die Materialstabilität wurde verbessert, um die Fraktion feinster Teilchen möglichst gering zu halten, und somit einem Materialaustrag dieser Teilchen aus dem Reaktor entgegenzuwirken. Vorzugsweise wird eine Sieblinie des eingesetzt, bei welcher mindestens 90 % der Partikel einen Durchmesser von 0,2 - 0,5 mm aufweisen. Idealerweise beträgt der Anteil an Partikeln mit einer Größe von 0,5 mm mindestens 50%. Wird das CSH-Material in zu grober Ausführung gewählt, so sinkt die Reaktivität des Substrats. Hingegen kann es auch Nachteile haben, wenn das Material zu fein ist, da es als Schwebstoff in verschiedene Anlageteilen weitergetragen wird, wo es störende Ablagerungen ausbilden kann mit den entsprechend negativen Auswirkungen für die Anlage.

In einer weiteren bevorzugten Ausführung hat das Substrat eine hohe Porosität bei einem Schüttgewicht von 0,4 - 0,6 kg/m³. Substratpartikel mit einer solchen Porosität gewährleisten eine große Kontaktfläche zum Abwasser, was in einer effizienten Eliminierung von Phosphat aus dem Abwasser gewährleistet.

Die Dimensionierung des Rührreaktors wird bemessen nach dem Durchsatz und der mittleren Aufenthaltzeit des Abwassers (Volumen des Reaktors) sowie nach der zulässigen Steiggeschwindigkeit der Substratpartikel (Durchmesser des Reaktors).

Auf der Basis des Stokeschen Gesetzes kann die optimale Behälterabmessung errechnet werden. Zur Sedimentation der Partikel im Gegenstrom muss gelten:

Sedimentationsgeschwindigkeit der Partikel $v_p$ > Durchflussgeschwindigkeit des Fluids $v_f$.

Die Sedimentationsgeschwindigkeit des Partikels berechnet sich nach Gleichung (1):

$$v_p = \frac{2 * r^2 * g * (\rho_p - \rho_f)}{9 * \eta} \quad (1),$$

mit $v_p$ - Sedimentationsgeschwindigkeit (Partikel)
g - Erdbeschleunigung
r - Radius des sinkenden Gegenstandes
$\rho_p$ - Dichte des Partikels
$\rho_f$ - Dichte des Fluids
$\eta$ - Dynamische Viskosität des Fluids.

Dabei lässt sich die Durchflussgeschwindigkeit des Fluids aus der Gleichung (2) berechnen:

$$Q = v_f \cdot A \qquad (2),$$

mit Q - Durchsatz durch den Rührreaktor
A - Fläche des Rührreaktors

Grundsätzlich ist die Dimensionierung des Rührreaktors und des darin angeordneten Rührers derart zu optimieren, dass in Abhängigkeit von der Viskosität des Fluids und der eingesetzten Menge an Substrat eine Rührgeschwindigkeit eingestellt werden kann, welche das Material gerade noch vollständig in Suspension hält. Die am Partikel angreifende Erosion durch Einwirkung von Scherkräften soll gleichzeitig minimal sein. Der Energieeintrag in die Suspension durch Rühren liegt vorzugsweise im Bereich von 0,3 bis 0,6 W/L. Dem Fachmann stehen hierfür kommerziell erhältliche Rührer in unterschiedlichen Ausführungen und Größen zur Verfügung.

Sobald das Substrat mit Phosphat gesättigt ist, kann es aus dem Rührreaktor abgetrennt werden. Dies geschieht entweder kontinuierlich, indem das Substrat nach einer bestimmten mittleren Verweilzeit im Rührreaktor sedimentiert und abgetrennt wird, oder durch kurzzeitiges Unterbrechen der Rührfunktion. Dadurch setzen sich die Substratpartikel größtenteils ab und können entfernt werden. Als wichtiges Indiz für die Sättigung des Substratmaterials mit Phosphat kann ein Absinken des pH-Werts der im Rührreaktor befindlichen Suspension herangezogen werden. Sobald der pH-Wert unter den Wert des Zulaufs absinkt, sollte das Substrat ausgetauscht werden oder im kontinuierlichen Betrieb frisches Substrat nachgefüllt werden.

Zur besseren Entfernung des gesättigten Substrats ist der Rührreaktor vorzugsweise am unteren Ende konisch geformt. Idealerweise ist dieses untere Ende mit einer Zellradschleuse oder einer Absaugpumpe ausgestattet, damit der Austrag des festen Substrats effizienter vonstatten geht.

Der Ablauf des von Phosphat gereinigten Wassers aus dem Rührreaktor ist in der Ruhezone angeordnet und derart ausgestaltet, dass möglichst wenig Substratpartikel oder Reaktionsprodukte ausgetragen werden. Flotierbare Stoffe können beispielsweise durch ein Steigrohr oder Zick-Zack-Rinnen mit Tauchwand und Skimmrinne kontrolliert abgefangen werden. Optional kann der Ablauf über eine Zahnschwelle verfügen. Feinstpartikel des reaktiven Substrates und "frei" kristallisierte Produkte können trotzdem in geringem Maß aus dem Rührreaktor ausgetragen werden. Damit diese in weiteren Verlauf der Kläranlage keinen Schaden verursachen (Anbackungen auf beweglichen Organen wie Schieber, Ventile und Pumpen), ist dem Rührreaktor ein Sedimentationsbehälter nachgeschaltet.

Der Ablauf aus dem Rührreaktor ist so mit dem Sedimentationsbehälter verbunden, dass das gereinigte Abwasser als Zulauf in die mittlere Höhe des Sedimentationsbehälters gelangt. Vorzugsweise umfasst der Sedimentationsbehälter eine Tauchwand. Optional ist der Sedimentationsbehälter mit einem Prallteller ausgestattet, sodass die Turbulenzen des Wassers minimiert werden und der Sedimentationsprozess zügig verläuft.

Vorzugsweise gelangt das gereinigte Abwasser im freien Gefälle in den Sedimentationsbehälter, in welchem die den Rührreaktor evtl. verlassenden Partikel sedimentieren. Die Maße des Sedimentationsbehälters werden ähnlich bestimmt wie die des Rührreaktors. Vorzugsweise ist der Ablauf aus dem Sedimentationsbehälter in Form einer Ablaufrinne ausgestaltet, die an der Wasseroberfläche befindlich ist.

Sollten besondere Randbedingungen aus der Kläranlage oder dem Einsatzort gegeben sein, so ist es möglich, optional einen weiteren Speicherbehälter anzuschließen. Damit wird eine kontinuierliche, anlagenspezifische Dosierung der Abgabe des Abwassers möglich. Außerdem besteht die Möglichkeit, eventuell ausgetragene Feinstpartikel zu sedimentieren. Zu diesem Zweck kann der Speicherbehälter mit einer Tauchwand zwischen Zu- und Ablauf ausgestattet sein.

Optional ist es möglich, zur Verbesserung der Effektivität geeignete Verfahren zur Phosphor-Freisetzung aus der organischen Matrix (wie z. B. der Ultraschall-Desintegration) vorzuschalten. Außerdem ist es möglich, bei speziellen Anforderungen an die Ablaufqualität, Membranfiltrationsanlagen anstelle der Sedimentations- und Speicherbehälter nachzuschalten.

Das erfindungsgemäße Verfahren zur Eliminierung von Phosphaten aus Abwasser umfasst folgende Verfahrensschritte:

a) Als zentraler Bestandteil des Verfahrens wird ein CSH-Substrat bereitgestellt, wie es oben bereits beschrieben ist.
b) Anschließend wird das Substrat mit dem Abwasser vermischt, sodass etwa 2 - 10 Gewichts-% an CSH-Substrat in der Suspension vorhanden sind. Lösungsprozesse des reaktiven CSH-Substrats bewirken eine Erhöhung des pH-Wertes der Suspension auf Werte von mindestens 8. Damit sind günstige Reaktionsbedingungen gegeben, dass die im Abwasser gelösten Phosphate entweder an der Oberfläche und in den Porenräumen des reaktiven Substrates kristallisiert. Die Suspension wird durch Rühren aufrechterhalten, sodass sich die Substratpartikel gut mit dem Abwasser vermischen.
c) Nach einer Mindestkontaktzeit, die je nach Rahmenbedingungen unterschiedlich gewählt werden kann und die abhängig ist von verschiedenen Parametern, wie z.B. Art des Abwassers, dessen Viskosität und des zu erzielenden Restphosphatgehalts, wird das mit phosphathaltigen Mineralphasen beladene CSH-Substrat abgetrennt, indem es sich am Reaktorboden absetzt (Sedimentation).

d) Der Überstand, der aus Phosphat-abgereichertem Abwasser besteht, wird in einem Folgeschritt abgetrennt. Dies kann kontinuierlich geschehen, indem am oberen Ende des Reaktors ein Ablauf angeordnet wird.

In einer bevorzugten Ausführung des Verfahrens wird das CSH-Substrat in Schritt b) kontinuierlich zum Abwasser hinzugefügt und in Schritt c) kontinuierlich abgetrennt. Der Fachmann kann die Menge an zugefügtem (abgetrenntem) Substrat an den gegebenen Vorraussetzungen anpassen, wobei sich die Substratmenge hauptsächlich an der Qualität und der Durchflussmenge des Abwassers orientiert.

In einer weiteren bevorzugten Ausführung des Verfahrens beträgt die mittlere Kontaktzeit des Substrats im Abwasser von 0,5 bis 2 Stunden.

Für das beschriebene Verfahren eignet sich insbesondere der Einsatz einer Anlage zur Phosphateliminierung wie sie oben beschrieben ist.

Eine zentrale Bedeutung sowohl bei dem Verfahren als auch bei der Anlage kommt dem CSH-Substrat zu. Dieses CSH-Substrat erzielt in wässriger Lösung einen pH-Wert von mindestens 8, so dass sich die Milieubedingungen für die Kristallisation/Präzipitation von P-haltigen Mineralphasen wie z. B. Calciumphosphaten oder Magnesium-Ammonium-Phosphat (Struvit) gegenüber Calcit signifikant verbessern, was in einer höheren Effizienz sichtbar wird. Im Gegensatz zur herkömmlichen Fällung von Phosphaten werden keine zusätzlichen Reagenzien benötigt, um die zur Kristallisation/Präzipitation erforderlichen Milieubedingungen einzustellen.

Ein weiterer Vorteil des eingesetzten Substrates ist die größere Stabilität des Materials im Hinblick auf organisches Coating der Oberfläche im Vergleich zu Calcit. Dies bedeutet eine breitere Anwendung des neu entwickelten Verfahrens auch in organisch hochbelasteten Abwässern wie z. B. Gülle oder Schlammwasser. Die Effizienz des Verfahrens nimmt mit zunehmender organischer Belastung des Abwassers ab. Dennoch ist es möglich, mit dem Verfahren z. B. landwirtschaftliches Abwasser wie z. B. Schweinegülle mit einem DOC von bis zu 8 g/L wirtschaftlich zu behandeln.

Während der Kontaktphase von CSH-Substrat im Phosphathaltigen Abwasser verändert sich das eingesetzte CSH-Substrat insbesondere durch Kristallisation von Phosphat in Form von Phosphat enthaltenden Mineralphasen. Insbesondere konnten drei Mineraltypen identifiziert werden: Erstens kann sich Hydroxylapatit ($Ca_5(PO_4)_3OH$), zweitens, bei Anwesenheit von Ammonium- und Magnesiumionen, kann sich Struvit ($(NH_4)Mg[PO_4]·6H_2O$) ausbilden und drittens wurde Brushit ($CaHPO_4·2H_2O$) identifiziert. Diese Aufzählung ist nicht abschließend, denn es sind zahlreiche phosphathaltige Mischkristalle denkbar. Daher wird in dieser Beschreibung verallgemeinernd die Bezeichnung der "phosphathaltigen Mineralphasen" verwendet.

Der Reaktionsmechanismus der Kristallisierung P-haltiger Mineralphasen umfasst zwei konkurrierende Terme. Auf der einen Seite begünstigt die Thermodynamik die Kristallisation von v.a. Hydroxylapatit-ähnlichen (HAp) Mineralphasen, da HAp die stabilste Phosphatmineralmodifikation darstellt. Auf der anderen Seite muss zur Bildung neuer Kristalloberflächen Arbeit aufgewendet werden. Die Anwesenheit von Kristallisationskeimen in Form von CSH-Partikeln setzt die Aktivierungsenergie herab und ermöglicht so eine Kristallisation von phosphathaltigen Mineralphasen an der inneren und äußeren Oberfläche des Kristallisationsmaterials, also der CSH-Partikel.

Das CSH-Material setzt aufgrund von Lösungsprozessen, wie bereits erwähnt Hydroxidionen frei, was eine Erhöhung des pH-Wert auf Werte von mindestens 8 zur Folge hat. Die Kristallisation der phosphathaltigen Mineralphasen wie Hydroxylapatit oder Struvit ist im Bereich von pH 8 bis pH 10 begünstigt.

Somit hat die Verwendung des CSH-Substrats mehrere Vorteile für das erfindungsgemäße Verfahren: Neben der katalytischen Wirkung durch die Bereitstellung einer reaktiven Oberfläche entfällt zusätzlich eine Einstellung des pH-Werts z.B. mit Hilfe von Laugen. Letztlich konnte beim erfindungsgemäßen Verfahren nur eine geringe Anreicherung von Schwermetallen im Produktpartikel beobachtet werden, was die Möglichkeit zur direkten Weiterverwendung eröffnet.

Die im o.g. Verfahren erhaltenen CSH-Substratpartikel haben eine veränderte Oberflächenmorphologie. Dies ist auf die phosphathaltigen Mineralphasen zurückzuführen, welche sich auf der Oberfläche der Produktpartikel kristallisiert haben. Die nach dem beschriebenen Verfahren hergestellten CSH-Partikel mit phosphathaltigen Mineralphasen sind ebenfalls Bestandteil der vorliegenden Erfindung.

Die Produktpartikel sind direkt einsetzbar als Phosphatdünger für landwirtschaftliche Zwecke. Insbesondere ist dieser Dünger attraktiv, da die Freisetzung der Phosphate an Nutzpflanzen relativ langsam geschieht. Dadurch wird ein schnelles Auswaschen der Phosphationen in tiefere Erdschichten oder in das Grundwasser verringert. Weiterhin ist die geringe Belastung an Schwermetallen der mit phosphathaltigen Mineralphasen beladenen CSH-Partikel wichtig für einen direkten Eintrag auf landwirtschaftliche Nutzflächen.

Die Erfindung wird im Folgenden mit Ausführungsbeispielen und Abbildungen erläutert.

**Fig. 1:** Schematische Darstellung der erfindungsgemäßen Anlage zur Phosphateliminierung.

**Fig. 2:** Darstellung der Effizienz des eingesetzten CSH-Substrates anhand der Phosphateliminierung im Vergleich zu Calcit und Sand als Kristallisationsmaterial.

**Fig. 3:** Phosphateliminierung als Funktion der Zeit für verschieden Abwässer mit unterschiedlicher organischer Belastung.

**Fig. 4:** Qualitative Darstellung der Produkt- und Substratqualität anhand eines Röntgendiffraktogrammes mit (a) Struvit, (b) Hydroxylapatit, (c) Brushit und (d) CSH-Substrat.

**Fig. 5:** ESEM-Aufnahmen von CSH-Substrat und Produkt.

**a)** Original CSH-Partikel mit hoher spezifischen Oberfläche
**b)** Produktpartikel mit phosphathaltigen Mineralphasen an der Oberfläche (und Trocknungsriss)

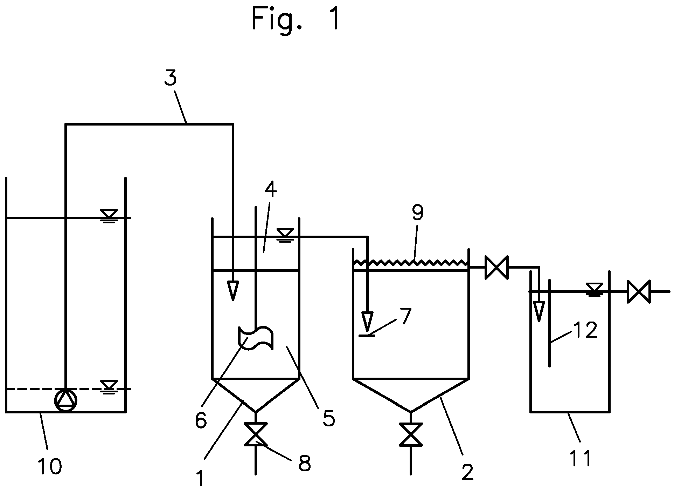

Die erfindungsgemäße Anlage ist schematisch in **Fig. 1** dargestellt. Das Abwasser gelangt hier aus einem Vorlagebehälter **10** in den Rührreaktor **1**. Der Rührreaktor **1** ist in eine obere Ruhezone **4** und eine untere Reaktionszone **5** unterteilt. In der Reaktionszone **5** sind der Zulauf **3** des Abwassers und eine Rührvorrichtung **6** angeordnet. In dieser Zone findet die Durchmischung des Abwassers mit dem Substrat statt, während in die Substratpartikel in möglichst geringem Umfang in die Ruhezone **4** gelangen sollten, damit nachfolgende Anlagenteile nicht durch Ablagerungen beeinträchtigt werden. Der untere Bereich des Rührreaktors **1** ist konisch geformt, damit der Abstich des verbrauchten bzw. gesättigten CSH-Substrats vereinfacht wird. Das Phosphat-abgereicherte Wasser wird aus der Ruhezone **4** heraus in einen Sedimentationsbehälter **2** mit Prallteller **7** geleitet. Hier können sich die übrigen Schwebstoffe des Substrats absetzen. Das sedimentierte Material sammelt sich am unteren Ende des Sedimentationsbehälters **2** und wird hier wie auch im Rührreaktor **1** mittels einer Zellradschleuse **8** ausgetragen. Der Ablauf ist am oberen Teil des Behälters in Form einer Ablaufrinne **9** ausgestaltet, wobei das Abwasser in einen nachgeschalteten Speicherbehälter **11** gelangt. Hier umfasst der Behälter eine Trennwand **12**, mit der die Sedimentation von Restschwebstoffen verbessert wird.

**Beispiel 1:** Effizienz des eingesetzten CSH-Substrats

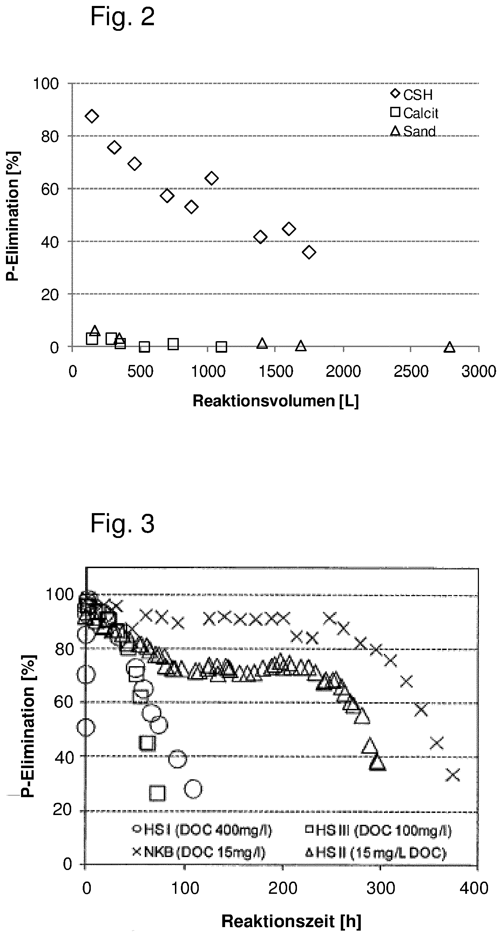

Kommunales Abwasser wurde in den in **Fig. 2** angegebenen Mengen mit 4 kg des jeweiligen Substrats (CSH, Calcit, Sand) versetzt. Die Suspensionen wurden im Batch-Verfahren während einer Stunde gerührt und anschließend wurden die Substrate während einer weiteren Stunde sedimentiert. Anschließend wurde der Phosphatgehalt im Überstand analysiert und mit dem Phosphatgehalt des Abwasser verglichen. Die Ergebnisse sind in **Fig. 2** dargestellt. Es zeigt die hohe Effizienz der P-Elimination bei dem verwendeten CSH-Substrat im Vergleich zu dem eingesetzten Calcits (Juraperle) und Quarzsand (Stellung einer reaktiven Oberfläche zur Herabsetzung der Aktivierungsenergie) bei gleicher organischer Belastung des Abwassers.

**Beispiel 2:** Einfluss von organischem Material

Die organische Belastung eines Abwassers kann die die Kristallisation in verschiedener Weise hemmen. Die reaktive Oberfläche kann von gelöster organischer Substanz belegt werden, sodass ein organisches Coating die weitere Reaktion unterbindet. Auch kann organische Substanz wie z.B. im Fall von Huminstoffen aufgrund unterschiedlicher funktioneller Gruppen mit dem Abwasser reagieren.
In halbtechnischen Experimenten wurde der Einfluss der organischen Substanz anhand von synthetischem und natürlichem Abwasser untersucht. Folgende Abwässer wurden untersucht:

HSI: mit Huminsäure künstlich organisch belastetes Leitungswasser auf einen DOC (Dissolved Organic Carbon = Gehalt an gelöster organischer Substanz) von 400 mg/L.

HSII: mit Huminsäure künstlich organisch belastetes Leitungswasser auf einen DOC von 15 mg/L.

HSIII: HSII: mit Huminsäure künstlich organisch belastetes Leitungswasser auf einen DOC von 100 mg/L.

NKB: Nachklärbeckenwasser mit einem natürlichen DOC von 15 mg/L.

In **Fig. 3** ist die Abnahme des Phosphatgehalts als Funktion der Zeit dargestellt. In dieser Grafik ist der Einfluss der Art wie auch des Gehaltes der organischen Belastung zu erkennen.

**Beispiel 3:** Identifizierung phosphathaltiger Mineralphasen am Produktpartikel

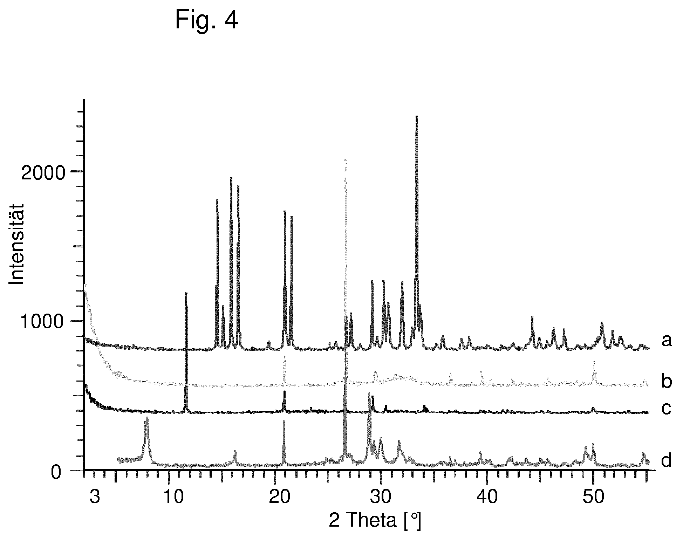

In verschiedenen Pilotversuchen wurde das CSH-Substrat mit unterschiedlichen Abwasserqualitäten in Kontakt gebracht. Die separierten Produkte werden nach Trocknung gemahlen und mittels Röntgendiffraktometrie untersucht. In **Fig. 4** sind Röntgendiffraktogramme vom frischen CSH-Substrat und den Produkten, d.h. dem CSH-Substrat nach Inkubation mit unterschiedlichen Abwasserqualitäten dargestellt. **Fig. 4** zeigt den Einfluss der Abwasserqualität auf die generierten Produkte. Produkt (a) ist Struvit, auch als MAP (= Magnesium-Ammonium-Phosphat) bekannt, ein qualitativ hochwertiger Mineraldünger. Struvit entsteht bei der Behandlung von ammoniumhaltigem Abwasser wie z. B. Zentratabwasser kommunaler Kläranlagen oder landwirtschaftlicher Abwässer wie z. B. Gülle. Produkt (b) ist aus der Behandlung von Abwasser einer kommunalen Kläranlage mit biologischer P-Elimination entstanden und besteht im Wesentlichen aus Hydroxylapatit-ähnlichen Calciumphosphat-Phasen. Hydroxylapatit stellt die thermodynamisch stabilste Calciumphosphat-Modifikation dar und ist aufgrund des geringen Löslichkeitsproduktes schwer löslich. Das im Rahmen des hier aufgezeigten Verfahrens generierte Produkt ist aufgrund der Abwassermatrix in hohem Maße fehlgeordnet und mikrokristallin, was die Löslichkeit gegenüber der Reinsubstanz deutlich erhöht. Produkt (c) wurde im Zusammenhang mit einem an Phosphat hochbelasteten Abwasser von vergleichsweise niedrigem pH-Wert, wie es z. B. in der milchverarbeitenden Industrie anfällt, generiert. Das Diffraktogramm zeigt Brushit, ein leichtlösliches Calciumphosphat. Demgegenüber ist zeigt das Substrat (d) als Bestandteil des CSH-Substrates die Mineralphasen Tobermorit, Quarz und evtl. geringe Anteile an Calcit. Somit bestehen die Produkte aus P-haltigen Mineralphasen, die im Ausgangssubstrat nicht zu finden sind. Es findet eine Transformation des Materials statt, was das beschriebene Verfahren als Kristallisationsverfahren auszeichnet und von einem Sorptionsverfahren unterscheidet.

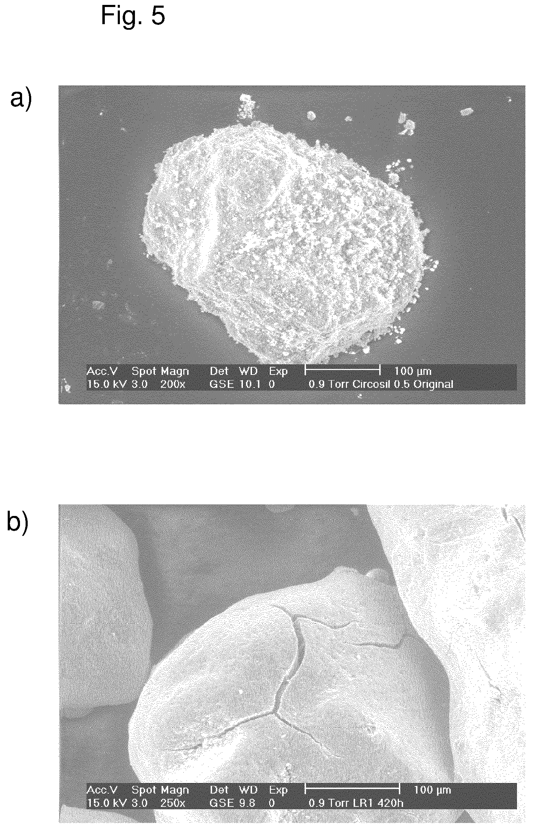

Mit Hilfe der elektronenmikroskopischen Aufnahme (**Fig. 5 a,b**) wurde die Oberflächenmorphologie der Partikel genauer untersucht. So ist zu erkennen, dass die Oberfläche des CSH-Partikels (**Fig. 5a**) sehr viel rauer ist im Vergleich zu der eines Produktpartikels (**Fig. 5b**), bei dem die Oberfläche mit phosphathaltigen Mineralphasen, hauptsächlich in Form von Hydroxylapatit, belegt ist.

**Beispiel 4:** Schwermetallanalyse

Damit die im erfindungsgemäßen Verfahren entstehenden Produkte in der Phosphatindustrie (in der Regel als Düngemittel) weiterverarbeitet werden können, ist neben dem Phosphatgehalt auch die Belastung an Schwermetallen für die Verwendung entscheidend. In **Tabelle 1** sind die Schwermetallgehalte des Substrats zum einen und zum anderen die Schwermetallgehalte der Produktpartikel aus **Beispiel 3**. In der Tabelle ist zu erkennen, dass die Belastung der Produkte mit Schwermetallen gering ist. Insbesondere sind die gemessenen Schwermetallgehalte weit unter den gesetzlichen Verordnungen sowohl für Düngemittel, Klärschlamme, Kompost und Bioabfall als auch für vorbelastete Böden selbst. Die ist ein deutliches Indiz dafür, dass die erhaltenen Produktpartikel mit phosphathaltigen Mineralphasen als Düngemittel unbedenklich in der Landwirtschaft eingesetzt werden können.

**Tabelle 1:** Schwermetallgehalte in [mg/kg Trockenmasse] in Substrat und Produkt nach **Beispiel 3** (n.n. = nicht nachweisbar).

| | Zn | Cu | Ni | Cr | Hg | Pb | Cd |
|---|---|---|---|---|---|---|---|
| CSH-Substrat | 0.62 | 0.20 | 0.15 | 0.06 | n.n. | n.n. | n.n. |
| Produkt A | 0.77 | 0.22 | 0.15 | 0.33 | n.n. | n.n. | n.n. |
| Produkt B | 12.5 | 0.99 | 0.24 | 0.37 | n.n. | n.n. | n.n. |
| Grenzwerte Verordnungen | | | | | | | |
| Düngemittel-VO* | - | - | 80 | 300 | 1 | 150 | 1,5 |
| Klärschlamm-VO** | 200 | 60 | 50 | 100 | 1 | 100 | 1,5 |
| RAL-Kompost | 300 | 75 | 50 | 100 | 1 | 100 | 1,0 |
| Bio-Abf.-VO*** | 100 | 70 | 35 | 70 | 0,7 | 100 | 1,0 |
| *Düngemittelverordnung, Grenzwerte lt. Tab. 1.4 Sp.I, Stand 14.12.2009; **Klärschlammverordnung, Stand 09.11.2010; ***Bio-Abfallverordnung, Gabe 30 to TS/ha, Stand 09.11.2010. | | | | | | | |

**Patentansprüche**

1. Anlage zur Phosphateliminierung aus Abwasser in kontinuierlichem Betrieb umfassend: einen im wesentlichen zylindrischen Rührreaktor, der mit Calcium-Silicat-Hydrat (CSH) als Kristallisationssubstrat beschickt ist, und einen Sedimentationsbehälter, wobei der Rührreaktor in eine im oberen Teil befindliche Ruhezone und eine im unteren Teil befindliche Reaktionszone unterteilt ist, und der Rührreaktor weiterhin eine Rührvorrichtung und einen Zulauf umfasst, die beide im Wesentlichen mittig in der Reaktionszone angeordnet sind, und der Ablauf aus der Ruhezone heraus angeordnet ist, und wobei der Rührreaktor dem Sedimentationsbehälter derart vorgeschaltet ist, dass der Ablauf aus der Ruhezone des Rührreaktors als Zulauf in die mittlere Höhe des Sedimentationsbehälters verbunden ist.

2. Anlage nach Anspruch 1, wobei der Rührreaktor derart aufgeteilt ist, dass die Ruhezone 10 - 30 % und die Reaktionszone 70 - 90 % des Rührreaktorvolumens ausmacht.

3. Anlage nach einem der Ansprüche 1 bis 2, wobei der Rührreaktor und der Sedimentationsbehälter am unteren Ende konisch geformt sind und mit einer Zellradschleuse oder Absaugpumpe ausgestattet sind.

4. Anlage nach einem der Ansprüche 1 bis 3, wobei in der Ruhezone des Rührreaktors vor dem Ablauf eine Zahnschwelle angeordnet ist.

5. Anlage nach Anspruch 1 bis 4, wobei das CSH-Substrat in Partikelform vorliegt und mindestens 90 % der Partikel einen Durchmesser von 0,2 - 0,5 mm, eingestellt mittels Sieblinie, aufweisen.

6. Verfahren zur kontinuierlichen Eliminierung von Phosphat aus Abwasser in einer Anlage nach einem der Ansprüche 1 bis 5, umfassend folgende Verfahrensschritte:

   a) Bereitstellen von Calcium-Silicat-Hydrat (CSH) als Kristallisationssubstrat,
   b) In Kontakt bringen des Abwassers mit CSH in einem Verhältnis von Abwasser zu CSH von 2-10 Gewichts-% und Aufrechterhalten der Suspension unter Rühren, wobei ein pH-Wert von mindestens 8 beibehalten wird,
   c) Abtrennen des mit phosphathaltigen Mineralphasen beladenen CSH durch Sedimentieren,
   d) Abtrennen des gereinigten Abwassers.

7. Verfahren nach Anspruch 6, wobei das CSH-Substrat in Schritt b) kontinuierlich zum Abwasser hinzugefügt wird und in Schritt c) kontinuierlich abgetrennt wird.

8. Verfahren nach Anspruch 6 oder 7, wobei die mittlere Kontaktzeit in Schritt b) von 0,5 bis 2 Stunden beträgt.

**Claims**

1. System for eliminating phosphates from waste water in continuous operation, comprising: an essentially cylindrical stirring reactor, which is loaded with calcium-silicate-hydrate (SH) as a crystallisation substrate, and a sedimentation tank, wherein the stirring reactor is subdivided into a rest zone located in the upper part and a reaction zone located in the lower part, and the stirring reactor further comprises a stirring device and an inlet, both of which are arranged essentially in the middle in the reaction zone, and the outlet from the reaction zone is arranged leading out of this, and wherein the stirring reactor is arranged upstream of the sedimentation tank in such a way that the outlet from the rest zone of the stirring reactor is connected as an inlet into the middle height of the sedimentation tank.

2. System according to claim 1, wherein the stirring reactor is subdivided in such a way that the rest zone comprises 10 - 30% of the stirring reactor volume and the reaction zone 70 - 90%.

3. System according to any one of claims 1 to 2, wherein the stirring reactor and the sedimentation tank is conically shaped at the lower end and equipped with a rotary wheel sluice or suction pump.

4. System according to any one of claims 1 to 3, wherein a dentated sill is arranged in the rest zone of the stirring reactor, upstream of the outlet.

5. System according to any one of claims 1 to 4, wherein the CSH substrate is present in particle form, and at least 90% of the particles exhibit a diameter of 0.2 - 0.5 mm, adjusted by means of a screening line.

6. Method for the continuous elimination of phosphate from waste water in a system according to any one of claims 1 to 5, comprising the following method steps:

   a) providing calcium-silicate-hydrate (CSH) as crystallisation substrate,
   b) bringing the waste water in contact with CSH in a proportion of waste water to CSH of 2 - 10 % by weight, and maintaining of the suspension under stirring, wherein a pH value of at least 8 is retained,
   c) separating the CSH laden with mineral phases containing phosphate, by sedimentation,
   d) separating the purified waste water.

7. Method according to claim 6, wherein the CSH substrate in step b) is continuously added to the waste water, and in step c) is continuously separated.

8. Method according to claim 6 or 7, wherein the average contact time in step b) is from 0.5 to 2 hours.

**Revendications**

1. Installation permettant d'éliminer en continu le phosphate dans des eaux usées comprenant : un réacteur agitateur essentiellement cylindrique qui est revêtu de silicate de calcium hydraté (CSH) en tant que substrat de cristallisation, et un bac de sédimentation, le réacteur agitateur étant subdivisé en une zone de repos située à sa partie supérieure et une zone réactionnelle située à sa partie inférieure, et le réacteur agitateur comprenant en outre un dispositif agitateur et une entrée essentiellement situés au centre de la zone réactionnelle, la sortie étant située dans la zone de repos, et le réacteur agitateur étant monté en amont du bac de sédimentation de sorte que la sortie de la zone de repos du réacteur agitateur soit reliée de façon à constituer une entrée à mi-hauteur du bac de sédimentation.

2. Installation conforme à la revendication 1, dans laquelle le réacteur agitateur est subdivisé de sorte que la zone de repos constitue 10 - 30 % du volume du réacteur agitateur et que la zone réactionnelle constitue 70 - 90% de ce volume.

3. Installation conforme à l'une des revendications 1 et 2 dans laquelle le réacteur agitateur et le bac de sédimentation ont une forme conique à leur extrémité inférieure et sont équipés d'une vanne à roue cellulaire ou d'une pompe d'aspiration.

4. Installation conforme à l'une des revendications 1 à 3 dans laquelle un seuil à denture est monté dans la zone de repos du réacteur agitateur, en avant de la sortie.

5. Installation conforme aux revendications 1 à 4 dans laquelle le substrat CSH se présente sous la forme de particules et au moins 90% de ces particules ont un diamètre de 0,2 à 0,5 mm, ajusté au moyen d'une courbe granulométrique.

6. Procédé d'élimination en continu de phosphate dans des eaux usées dans une installation conforme à l'une des revendications 1 à 5, comprenant les étapes suivantes consistant à :

   a) se procurer du silicate de calcium hydraté (CSH) en tant que substrat de cristallisation,
   b) mettre en contact les eaux usées avec le CSH avec un rapport eaux usées / CSH de 2 à 10 % en poids et maintenir la suspension sous agitation, un pH d'au moins 8 étant maintenu,
   c) séparer le CSH chargé de phases minérales renfermant du phosphate par sédimentation,
   d) séparer les eaux usées purifiées.

7. Procédé conforme à la revendication 6, selon lequel le substrat CSH est ajouté en continu aux eaux usées dans l'étape b) et est séparé en continu dans l'étape c).

8. Procédé conforme à la revendication 6 ou 7, selon lequel dans l'étape b) le temps de contact moyen est de 0,5 à 2 heures.

# Fig. 1

## Fig. 2

## Fig. 3

Fig. 4

Fig. 5

a)

b)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 1035744 B4

### In der Beschreibung aufgeführte Nicht-Patentliteratur

- **WAGNER, H.** Stoffmengenflüsse und Energiebedarf bei der Gewinnung ausgewählter mineralischer Rohstoffe - Teilstudie Phosphat, Bundesanstalt für Geowissenschaften und Rohstoffe, Reihe H, Heft SH5. *Geologisches Jahrbuch,* 1999
- Phosphorrückgewinnung. *Korrespondenz Abwasser,* Juni 2003, 805-814
- **UENO, Y. ; FUJII, M.** Three years operating experience and selling recovered struvite from full-scale plant. *Environmental Technology,* November 2001, vol. 22 (11), 1373-1381
- **HEINZMANN, B. ; ENGEL, G.** Verein zur Förderung des Institutes WAR (Hrsg.): Rückgewinnung von Phosphor aus Abwasser und Klärschlamm, Konzepte, Verfahren, Entwicklungen. 75. Darmstädter Seminar Abwassertechnik, 12.-13. November 2005. Schriftenreihe WAR. *Stand der Phosphorrückgewinnung bei Kläranlagen mit biologischer Phosphorelimination der Berliner Wasserbetriebe,* 2005, vol. 167, ISBN 3-932518-63-2
- **STRATFUL, I. ; BRETT, S. ; SCRIMSHAW, M.B. ; LESTER, J.N.** Biological phosphorus removal, its role in phosphorus recycling. *Environmental Technology,* Juli 1999, vol. 20 (7), 681-696
- **STRATFUL, I. ; BRETT, S ; SCRIMSHAW, M.B. ; LESTER, J.N.** Biological phosphorus removal, its role in phosphorus recycling. *Environmental Technology,* Juli 1999, vol. 20 (7), 681-696
- **PINNEKAMP, J. ; MONTAG. D. ; GETHKE, K. ; GOEBEL, S. ; HERBST, H.** Rückgewinnung eines schadstofffreien, mineralischen Kombinationsdüngers ''Magnesium-Ammonium-Phosphat - MAP'' aus Abwasser und Klärschlamm. UBA-Texte 25/07. *Forschungsbericht 20233308,* Juli 2007, ISSN 1862-4804
- **ABMA, W.R. ; DRIESSEN, W. ; HAARHUIS, R. ; VAN LOOSDRECHT, M.C.** Upgrading of sewage treatment plant by sustainable and cost-ewffective separate treatment of industrial wastewater. *Water Sci. Technol.,* 2010, vol. 61 (7), 1715-1722
- **EHHRECHT et al.** *Water Science and Technology,* 2011, vol. 63 (2), 339-344